# EUROPÄISCHE PATENTSCHRIFT

(11) **EP 2 830 935 B1**
(45) Veröffentlichungstag und Bekanntmachung des Hinweises auf die Patenterteilung: **04.04.2018**
(21) Anmeldenummer: 13713078.7
(22) Anmeldetag: 13.02.2013
(51) Int. Cl.: B63G 8/00, B63G 7/00

(54) **VERFAHREN ZUM DETEKTIEREN VON SEEMINEN UND SEEMINENDETEKTIONSSYSTEM**
METHOD FOR DETECTING SEA MINES ANS SEA MINE DETECTION SYSTEM
MÉTHOS DE DETECTION DE MINES MARINES ET SYSTÈME POUR DÉTECTER MINES MARINES

(30) Priorität: 30.03.2012 DE 102012006566
(43) Veröffentlichungstag der Anmeldung: 04.02.2015
(73) Patentinhaber: ATLAS ELEKTRONIK GmbH, 28309 Bremen (DE)
(72) Erfinder: LAMBERTUS, Detlef, 27711 Osterholz-Scharmbeck (DE); RICHTER, Ralf, 28876 Oyten (DE)
(74) Vertreter: thyssenkrupp Intellectual Property GmbH
(86) Internationale Anmeldenummer: PCT/DE2013/100052
(87) Internationale Veröffentlichungsnummer: WO 2013/143527

(56) Entgegenhaltungen:
- WO-A1-03/045776
- DE-B3-102006 045 686
- JP-A- S57 196 309
- US-A- 4 975 888

## Beschreibung

Die Erfindung betrifft eine Fahrzeuggruppe, welche ein unbemanntes Oberflächenfahrzeug und ein unbemanntes Unterwasserfahrzeug aufweist, und ein Seeminendetektionssystem, welches die Fahrzeuggruppe aufweist, sowie ein Fluggerät.

Seeminen sind Sprengladungen, die im Wasser gegen Schiffe und Unterseeboote eingesetzt werden. Der Einsatz von Seeminen dient regelmäßig einer Sperrung eines Seegebiets. Um Seeschiffe oder Schiffsverbände mit mehreren Schiffen bei Minengefahr zu schützen werden minenfreie Wege geschaffen, um die Schiffe durch den minenfreien Weg zu leiten. Bei der Minenjagd werden einzelne Minen geortet und anschließend entschärft oder gezielt gesprengt.

Es ist bekannt, Seeminen mit Hilfe von Sonargeräten zu orten. Das Sonargerät ist üblicherweise an Bord eines an der Oberfläche fahrenden Minenjagdbootes angeordnet, wobei im Unterwasserraum Ortungsdaten erfasst und bewertet werden. Dabei erfolgt nach dem Detektieren eines Kontakts, ein Klassifizieren des detektierten Kontakts als minenähnlicher Kontakt oder nicht minenähnlicher Kontakt.

Wird ein minenähnlicher Kontakt detektiert, erfolgt im nächsten Schritt ein Identifizieren der Mine, wofür herkömmlich Minentaucher oder ferngelenkte Unterwasserdrohnen eingesetzt werden.

Ergibt sich bei dem Identifizieren, dass das Sonar eingangs tatsächlich Ortungsdaten einer Seemine erfasst hat, so wird in einem anschließenden Verfahrensschritt die Seemine entschärft, gesprengt oder aber die vor den Seeminen zu schützenden Seeschiffe um die identifizierte Mine herumgeleitet.

Es ist dabei bekannt, zur Vernichtung der Seemine speziell für diese Mission mit einer Sprengladung ausgerüstete Unterwasserfahrzeuge einzusetzen.

Die WO 03/045776 A1 offenbart ein ferngesteuertes Minenjagdsystem, welches aus einem Unterwasserfahrzeug mit einer über die Wasseroberfläche ausfahrbaren Antenne und einem ferngesteuerten Unterwasserfahrzeug (ROV) besteht. Diese Unterwasserfahrzeuge werden aus dem Bug eines Überwasserschiffes freigesetzt und von einer externen Kontrollstation auf diesem Überwasserschiff per Funkt gesteuert, wobei das ferngesteuerte Unterwasserfahrzeug (ROV) über ein Antriebs- und Fernüberwachungskabel mit dem Unterwasserfahrzeug verbunden ist.

Die JP S57 196309 A offenbart ein indirektes Kontrollsystem für ein Unterwasserfahrzeug zur Überwachung und Behandlung von explosiven Stoffen, bei dem ein Mutterüberwasserschiff zunächst die Position einer explosiven Substanz im Meer detektiert und anschließend ein zweites Überwasserboot zu dieser Position leitet. Mittels einer Winde am Heck des Überwasserbootes wird ein ferngesteuertes Unterwasserfahrzeug (ROV) an einem Kabel auf eine vorgegebene Tiefe in der Nähe zur explosiven Substanz ins Meer abgelassen. Kontrollsignale werden vom Mutterüberwasserschiff drahtlos per Funk zum Überwasserboot und vom Überwasserboot über das Kabel zum ferngesteuerten Unterwasserfahrzeug übertragen.

Die US 4,975,888 A offenbart ein Minenneutralisationssystem mit einem bemannten Schleppüberwasserschiff mit einem Sonar, welches ein erstes Unterwasserfahrzeug mit einem zweiten Sonar zur Detektion und Klassifikation und nachfolgend ein zweites Unterwasserfahrzeug als Waffenträger zur Neutralisation einer Mine schleppt. Dieses weitere Unterwasserfahrzeug weist einen dritten Sonar zur Detektion und Klassifikation auf, welcher mit den beiden anderen Sonaren für den Bediener an Bord des Schleppüberwasserschiffes verbunden ist.

Mit den bekannten Mitteln ist die Schaffung oder Erkennung einer minenfreien Passage durch ein vermintes Seegebiet sehr zeitaufwändig, da sämtliche Seeminen unter Einsatz mehrerer Fahrzeuge detektiert und identifiziert werden müssen. Da für die Minenjagd die Erfassung von Ortungsdaten nötig ist und das Minenjagdboot daher mit seinem rumpfgebundenen Sonar wenigstens nahe an das verminte Seegebiet heranfahren muss oder sogar direkt ins Minenfeld einfahren muss, ist zudem eine erhebliche Gefährdung der bemannten Trägerplattform gegeben. Zum Schutz des bemannten Schiffes muss ferner regelmäßig die Fahrtgeschwindigkeit des zu schützenden Schiffsverbands reduziert werden.

Der vorliegenden Erfindung liegt das Problem zugrunde, eine Vorrichtung zum Detektieren von Seeminen zu schaffen, mit der ein effektives und zuverlässiges Detektieren von Seeminen unter Reduzierung der Gefahren für bemannte Schiffe gewährleistet ist.

Das Problem wird gelöst durch eine Fahrzeuggruppe, welche ein unbemanntes Oberflächenfahrzeug und ein unbemanntes autonomes Unterwasserfahrzeug aufweist, wobei das Unterwasserfahrzeug Ortungsmittel, insbesondere ein Sonar, zum Erfassen von Ortungsdaten in einem Unterwasserraum und eine Auswerteeinheit oder mehrere Auswerteeinheiten aufweist und die Auswerteeinheit oder die Auswerteeinheiten derart eingerichtet ist/sind, dass diese Detektionsmittel zum Detektieren eines Kontakts (MILEC) anhand der erfassten Ortungsdaten sowie mit Klassifizierungsmitteln zum Klassifizieren des detektierten Kontakts (MILEC) als minenähnlicher Kontakt (MILCO) oder nicht minenähnlicher Kontakt (NONMILCO) umfassen, wobei das Klassifizieren mittels eines Vergleichens des Kontakts (MILEC) mit bekannten Mineninformationen erfolgt, sodass ein minenähnlicher Kontakt (MILCO) als ein Minenkontakt (MINE) oder als sonstiger Gegenstand (NOMBO) identifizierbar ist.

Somit kann eine Fahrzeuggruppe bereitgestellt werden, welche autonom ein Seegebiet, insbesondere im Unterwasserraum, aufklären kann.

Insbesondere können Minen erkannt, klassifiziert und somit identifiziert werden. Weiteres, insbesondere autonomes, Vorgehen der Fahrzeuggruppe kann erfolgen, sodass beispielsweise Minen autonom, durch die Fahrzeuggruppe indiziert, gesprengt oder entschärft werden.

Das autonome Unterwasserfahrzeug kann die Ortungsdaten erfassen und kann die Detektion von Kontakten und das Klassifizieren der detektierten Kontakte vornehmen. Hierfür ist insbesondere das autonome Unterwasserfahrzeug vorgesehen, welches Mittel zum Erfassen von Ortungsdaten im Unterwasserraum sowie Mittel zum Detektieren und Mittel zum Klassifizieren der detektierten Kontakte aufweist. Auf diese Weise können ein Detektieren von Kontakten und ein Klassifizieren der detektierten Kontakte bereits mit großem Abstand von bemannten Schiffen durch eine autonom gesteuerte Mission des autonomen Unterwasserfahrzeugs erfolgen.

Bemannte Seeschiffe können somit deutlich beabstandet von einem verminten Seegebiet fahren und daher mit verbessertem Schutz ein Seegebiet durchfahren. Dabei steht durch den Abstand bemannter Seeschiffe zum Operationsgebiet der Fahrzeuggruppe auch bei größeren Fahrtgeschwindigkeiten der nachfolgenden bemannten Schiffe genügend Zeit zur Verfügung, um detektierte Seeminen zu vernichten oder zu entschärfen.

Darüber hinaus können durch das tauchfähige autonome Unterwasserfahrzeug auch in größeren Tiefen Ortungsdaten erfasst werden, welche für rumpfgebundene Ortungssysteme an Oberflächenschiffen unter Umständen nicht mehr zuverlässig oder mit nur geringer Auflösung erfassbar sind. Daher kann durch das Erfassen von Ortungsdaten ein zuverlässigeres Detektieren von Seeminen im Unterwasserraum als auch ein Detektieren von Grundminen erfolgen.

Als Mittel zum Erfassen von Ortungsdaten wird vorzugsweise ein Sonar (engl. Sound Navigation and Ranging) eingesetzt, wobei je nach Anwendungsfall horizontal oder vertikal ortende Geräte oder Kombinationen von horizontal und vertikal ortenden Geräten vorgesehen werden. Unter Sonar sind dabei insbesondere Einrichtungen zu verstehen, welche mit akustischen Sensoren, unter Nutzung von (Unterwasser-) Schall, Gegenstände im Unterwasserraum orten. Das Unterwasserfahrzeug kann dabei eine Vielzahl von Ortungssensoren aufweisen, welche miteinander gekoppelt werden können. Beispielsweise ist ein Seitensichtsonar mit einem Bugsonar und/oder einem Unterbodensonar verknüpft.

Bei dem Detektieren von Kontakten werden die Ortungsdaten bewertet. So kann durch eine Konturerkennung und/oder eine Schattenverarbeitung aus den Ortungsdaten ein Kontakt mit einem Unterwassergegenstand ermittelt oder als solches klassifiziert werden. Werden mehrere Sonare oder Sonarsysteme miteinander gekoppelt, insbesondere horizontale und vertikale oder weitere Sonarsensoren eingesetzt, so können die Ortungsdaten der einzelnen Sonare fusioniert und der Verarbeitung zum Detektieren von Kontakten unterzogen werden.

Beim Klassifizieren können die Ortungsdaten und/oder weitere Sensordaten, wie beispielsweise Kamerabilder einer Unterwasserkamera, ausgewertet werden.

Die Mittel zum Detektieren von Kontakten und die Mittel zum Klassifizieren umfassen eine oder mehrere Auswertungseinheiten, welche zum Bewerten der Ortungsdaten ausgebildet sind. Eine derartige Auswertungseinheit kann dem Sonarsystem zugeordnet und/oder in die Steuereinheit des Unterwasserfahrzeugs implementiert sein. Nachdem beispielsweise durch das Konturerkennen und/oder Schattenverarbeiten in den Ortungsdaten ein Kontakt detektiert ist, kann ein Klassifizieren und/oder Identifizieren des detektierten Kontakts als minenähnlicher Kontakt oder als nicht minenähnlicher Kontakt, beispielsweise mit ergänzenden Kamerabildern, erfolgen. Bei dem Schritt des Klassifizierens / des Identifizierens wird insbesondere der detektierte Kontakt mit bekannten Mineninformationen verglichen, welche durch eine entsprechende Minendatenbank bereitgestellt sein können.

Nachdem bei dem Bewerten der Ortungsdaten ein minenähnlicher Kontakt klassifiziert wurde, kann in dem darauffolgenden Schritt oder parallel ein Identifizieren dieses Kontakts vorgenommen werden. Um zu ermitteln, ob es sich um eine Seemine oder um einen sonstigen Gegenstand handelt, kann durch ein Mapping oder eine Korrelation von Bildinformationen oder Sonarinformationen mit den Minendatenbankinformationen eine Mine eindeutig identifiziert werden oder ein Minenkontakt ausgeschlossen werden. Ein Ausschluss kann insbesondere dadurch erfolgen, dass eindeutige Nichtminengegenstände, wie beispielsweise Fahrräder, erkannt werden, wobei in der Minendatenbank auch nicht Minengegenstände abgelegt sind.

In einer Ausführungsform ist das autonome Unterwasserfahrzeug mit dem unbemannten Oberflächenfahrzeug signalübertragend verbunden, wobei die Verbindung mittels eines Lichtwellenleiterkabels realisiert ist.

So kann eine Echtzeitübertragung bereitgestellt werden. Auch kann durch die physikalische Verbindung das Unterwasserfahrzeug bei einer Fehlfunktion ggf. aufgefunden und an Bord eines Schiffes verbracht werden.

Um die Auflösung und die Qualität der Ortungsmittel zu verbessern, können die Ortungsmittel mehrere Sonare oder Sonarsysteme umfassen. Durch Fusion der Daten kann eine Identifizierungsrate gesteigert werden. Je höher die Identifizierungsrate, desto sicherer kann ein Gegenstand als Mine oder als spezielle Mine erkannt werden.

In einer weiteren Ausführungsform weist das Oberflächenfahrzeug einen Antrieb und eine Steuereinrichtung auf, welche derart eingerichtet sind, dass das Oberflächenfahrzeug unter Berücksichtigung des Unterwasserfahrzeugs geführt wird. In dieser Ausprägung kann somit das Unterwasserfahrzeug "Master" und das Oberflächenfahrzeug "Slave" sein. Somit kann das Oberflächenfahrzeug schnell und adäquat auf Unterwassersituationen reagieren.

Um das aufzuklärende Seegebiet zügig von Minen zu räumen, kann das Oberflächenfahrzeug mit Sprengstoff ausgestattete Drohnen zur bedarfsweisen Vernichtung von Seeminen tragen. Hier kann das Steuern/Leiten der Drohnen vom Oberflächenfahrzeug und/oder vom Unterwasserfahrzeug erfolgen. Insbesondere das Steuern/Leiten durch das Unterwasserfahrzeug bietet den Vorteil, dass anhand der Ortungsdaten des Unterwasserfahrzeugs die Drohne gelenkt werden kann.

In einer weiteren Ausführungsform weist die Fahrzeuggruppe weitere Unterwasserfahrzeuge auf. Hiermit kann wiederum das Seegebiet schneller aufgeklärt werden. Es sind zwei, drei, vier, fünf und noch mehr Unterwasserfahrzeuge einsetzbar.

In einem weiteren Aspekt der Erfindung wird die Aufgabe gelöst durch ein Seeminendetektionssystem, welches eine zuvor beschriebene Fahrzeuggruppe und eine Trägerplattform aufweist, wobei das Seeminendetektionssystem derart eingerichtet ist, dass die Trägerplattform und das Oberflächenfahrzeug datenaustauschend verbunden sind, wobei die Verbindung insbesondere eine Funkverbindung ist über die ein Kommunizieren erfolgt. Auch kann die Trägerplattform über ein Lichtwellenleiterkabel mit dem Oberflächenfahrzeug oder dem Unterwasserfahrzeug verbunden sein. Somit kann ein extrem schneller Datenaustausch gewährleistet werden.

In einer diesbezüglichen Ausführungsform weist das Seeminendetektionssystem mehrere Fahrzeuggruppen mit jeweils einem Oberflächenfahrzeug und mindestens einem autonomen Unterwasserfahrzeug auf. Somit kann zügig eine passierbare Passage durch ein vermintes Seegebiet geschaffen werden, da mehrere Fahrzeuggruppen hintereinander entlang der zu durchfahrenden Passage abgesetzt werden können und autonom ein Seegebiet aufklären können.

In einer bevorzugten Ausführungsform der Erfindung führt dasselbe Unterwasserfahrzeug ein Identifizieren durch, welches die Mittel zur Erfassung der Ortungsdaten, die Detektionsmittel und die Klassifizierungsmittel aufweist. Das autonome Unterwasserfahrzeug kann während einer Patrouille zum Aufnehmen von Ortungsdaten sehr rasch einen als minenähnlichen Kontakt klassifizierten Kontakt anfahren und die Identifizierung beispielsweise mittels Kamera vornehmen. Auf diese Weise wird, in sicherer Entfernung zu bemannten Seeschiffen, ein sehr schnelles und effektives Detektieren von Seeminen möglich, d.h. ein Detektieren und Klassifizieren von Kontakten und ein anschließendes oder paralleles Identifizieren.

Das Detektieren und Klassifizieren als minenähnlicher Kontakt und das anschließende oder parallele Identifizieren kann im Rahmen eines Missionsprogramms von dem autonomen Unterwasserfahrzeug selbstständig durchgeführt werden.

In einer weiteren Ausführungsform werden die klassifizierten minenähnlichen Kontakte von dem Unterwasserfahrzeug einem bemannten Leitstand über eine Kommunikationseinrichtung mitgeteilt. Eine Bedienperson kann dann entscheiden, ob das autonome Unterwasserfahrzeug sein Navigationsgebiet nach einem Missionsprogramm verlassen und zum Identifizieren den Ort des klassifizierten Kontakts anfahren soll.

Nach dem Identifizieren als Seemine, kann die Seemine vernichtet oder entschärft werden oder, bei entsprechendem Bewerten der Orte bereits detektierter Seeminen, eine minenfreie Passage unter Umgehung der detektierten Seeminen bestimmt werden.

Das autonome Unterwasserfahrzeug kommuniziert bevorzugt mit einer bemannten Trägerplattform und übermittelt Informationen über die Detektion von Seeminen. Insbesondere erfolgt die Kommunikation über das Oberflächenfahrzeug, welches als Relais zwischen dem Unterwasserfahrzeug und der Trägerplattform fungiert.

Bei einer Ausführungsform, bei der das autonome Unterwasserfahrzeug zunächst nur die Erfassung von Ortungsdaten und ein Klassifizieren minenähnlicher Kontakte vornimmt, wird wenigstens die Information über klassifizierte Kontakte zur Trägerplattform übertragen, wobei anschließend seitens der Trägerplattform ein Identifizieren des klassifizierten Kontakts in die Wege geleitet werden kann. Dabei wird dem Unterwasserfahrzeug von der Trägerplattform ein entsprechender Auftrag zum Anfahren und Identifizieren des Kontakts erteilt oder ein weiteres Unterwasserfahrzeug zur Identifizierung als Seemine gestartet, welches den Ort des klassifizierten Kontakts anfährt.

In einer weiteren Ausführungsform erfolgt ein Identifizieren bereits klassifizierter Kontakte durch dasselbe autonome Unterwasserfahrzeug im Rahmen eines Missionsprogramms. Über die signalübertragende Verbindung zur Trägerplattform ist eine Überwachung der Tätigkeit des autonomen Unterwasserfahrzeugs möglich, wobei ggf. über die Verbindung seitens einer Bedienperson in das Seeminendetektionssystem oder die Fahrzeuggruppe eingegriffen werden kann.

Die Informationsübertragung vom autonomen Unterwasserfahrzeug kann kabellos oder in einer bevorzugten Ausführungsform über ein Lichtwellenleiterkabel erfolgen. Dabei erfolgt über das Lichtwellenleiterkabel ein leistungsfähiger Informationstransfer, wobei in Echtzeit die vom autonomen Unterwasserfahrzeug erfassten Messwerte über den Unterwasserraum zur Trägerplattform übertragen werden. Beispielsweise werden neben den Ortungsdaten aus den Ortungsdaten, durch ein Klassifizieren von Kontakten oder durch ein Identifizieren, gewonnene weitere Informationen, auch Kamerabilder oder weitere Missionsinformationen, gewonnen.

Die Übertragung von visuellen Darstellungen ist beim Verfahrensschritt des Identifizierens von besonderem Vorteil, da über die Echtzeitübertragung der Umgebung des Unterwasserfahrzeugs ggf. die Steuerung des sensiblen Manövers zum Anfahren einer Seemine von einer Bedienperson übernommen werden kann.

Das Seeminendetektionssystem, gemäß einer vorteilhaften Ausführungsform, umfasst neben einem oder mehreren Unterwasserfahrzeugen ein Oberflächenfahrzeug, welches über eine Funkverbindung mit der Trägerplattform kommuniziert. Auch bei einem weit entfernt von der Trägerplattform operierenden autonomen Unterwasserfahrzeug ist ein Informationstransfer, d.h. die Übermittlung von Information in Echtzeit und in umgekehrter Richtung der Empfang von Steuerbefehlen, möglich, wenn das Unterwasserfahrzeug von einem unbemannten Oberflächenfahrzeug begleitet wird. Das Oberflächenfahrzeug vermittelt dabei den Informationstransfer zwischen dem Unterwasserfahrzeug und der Trägerplattform.

Das Oberflächenfahrzeug kann einerseits über ein Lichtwellenleiterkabel mit dem autonomen Unterwasserfahrzeug und andererseits über eine Funkverbindung mit der Trägerplattform verbunden sein. Das Oberflächenfahrzeug weist dabei vorteilhaft einen Antrieb und eine Steuereinrichtung auf, welche das Oberflächenfahrzeug unter Berücksichtigung des Verhaltens des Unterwasserfahrzeugs führt. Beispielsweise wird das Oberflächenfahrzeug vorteilhaft während der Patrouille des Unterwasserfahrzeugs dem Unterwasserfahrzeug nachgeführt, sodass eine unerwünschte Zugbelastung des Lichtwellenleiterkabels ausgeschlossen ist.

Das Oberflächenfahrzeug bildet mit dem Unterwasserfahrzeug eine Fahrzeuggruppe, welche autonom in einem zugewiesenen Seegebiet Seeminen detektiert. Dabei sind einem Oberflächenfahrzeug vorteilhaft mehrere Unterwasserfahrzeuge zugeordnet, welche jeweils über ein Lichtwellenleiterkabel mit dem Oberflächenfahrzeug verbunden sind. In einer bevorzugten Ausführungsform sind beispielsweise zwei Unterwasserfahrzeuge vorgesehen, welche beiderseits des, zwischen den Unterwasserfahrzeugen fahrenden, Oberflächenfahrzeugs operieren und eine breite Passage aufklären.

Die Fahrzeuge der Fahrzeuggruppe werden auf einem Seeschiff oder einem Fluggerät mitgeführt und bedarfsweise in einem minengefährdeten Seegebiet eingesetzt. Vorzugsweise werden die Fahrzeuge auf demjenigen Seeschiff mitgeführt, welches auch zur Kommunikation mit dem Oberflächenschiff oder den Oberflächenschiffen des Seeminendetektionssystems oder der Fahrzeuggruppen ausgebildet ist oder welches über die signalübertragende Verbindung per Funkverbindung und Lichtwellenleiterkabel eine Überwachung der Mission durch eine Bedienperson ermöglicht.

In einer besonderen weiteren Ausführungsform umfasst das Seeminenerkennungssystem mehrere Fahrzeuggruppen mit jeweils einem Oberflächenfahrzeug und dem Oberflächenfahrzeug zugeordneten Unterwasserfahrzeugen, wobei jeder Fahrzeuggruppe ein bestimmtes Seegebiet zugewiesen ist. Auf diese Weise können die Fahrzeuggruppen zugleich die ihnen jeweils zugewiesenen Seegebiete patrouillieren und Seeminen detektieren. Dabei wird das zu patrouillierende minengefährdete Seegebiet, beispielsweise eine vorgesehene Passage, auf einzelne Fahrzeuggruppen aufgeteilt und dadurch insgesamt eine erhebliche Beschleunigung der Detektion sämtlicher Seeminen in dem aufgeklärten Seegebiet erreicht. Durch diese Vorgehensweise kann der zu schützende Schiffsverband mit einer erheblich höheren Geschwindigkeit (als der Aufklärungsgeschwindigkeit der Unterwasserfahrzeuge) durch das Seegebiet oder die minenfreie Passage geführt werden.

Die Fahrzeuggruppen können in einer Reihe entlang eines Kurses des nachfahrenden Seeschiffs oder des Schiffsverbands liegenden Seegebieten eingesetzt werden. Dabei werden die Fahrzeuggruppen nacheinander jeweils in neue Seegebiete an die Spitze der Reihe umgesetzt, wobei die Fahrzeuge der jeweiligen Fahrzeuggruppe in dieses neue Seegebiet überführt werden. Hat eine Fahrzeuggruppe ihre Mission in dem jeweils zugewiesenen Seegebiet erfüllt, so werden diese Fahrzeuge an die Spitze der Reihe der Fahrzeuggruppen umgesetzt. Durch das fortlaufende Umsetzen (Rollieren) der Fahrzeuggruppen, kann das Seeminendetektionssystem rasch eine Passage in einem minengefährdeten Seegebiet aufklären.

Zum Umsetzen der Fahrzeuggruppen werden die Unterwasserfahrzeuge der jeweiligen Fahrzeuggruppe in einer Ausführungsform von dem Oberflächenfahrzeug aufgenommen und mit der hohen Geschwindigkeit des Oberflächenfahrzeugs an die Spitze der Reihe zum Detektieren von Seeminen in einem neuen Seegebiet befördert. In einer weiteren Ausführungsform werden die Unterwasserfahrzeuge oder die gesamte Fahrzeuggruppe von einem schnellen Beförderungsmittel, beispielsweise einem Hubschrauber, aufgenommen und in das neue, dieser Fahrzeuggruppe zugewiesene, Seegebiet an die Spitze der Reihe der Fahrzeuggruppen befördert.

Die Geschwindigkeit des Detektierens von Seeminen im Kurs eines Seeschiffs oder eines Schiffsverbands steigt proportional mit der Anzahl der Fahrzeuggruppen, welche in einer Reihe im Kurs des Schiffs oder Schiffsverbands eingesetzt werden. Selbst mit einer geringen Fahrtgeschwindigkeit der Unterwasserfahrzeuge im Kurs des zu schützenden Schiffsverbands, welche durch Einsätze der Unterwasserfahrzeuge zur Identifizierung noch weiter reduziert sein kann, wird durch den gemeinsamen Einsatz mehrerer Fahrzeuggruppen in einer Reihe ein Seegebiet schnell aufgeklärt. Dadurch ist eine, der Anzahl der Fahrzeuggruppen des Seeminendetektionssystems entsprechend, erhöhte Geschwindigkeit für die nachfolgenden Seeschiffe oder dem in der minenfreien Passage nachfolgenden Schiffsverband möglich.

In einer weiteren Ausführungsform, trägt das Oberflächenfahrzeug unbemannte Unterwasserfahrzeuge in Form von mit Sprengstoff ausgestatteten Drohnen, insbesondere Ein- oder Mehrwegdrohnen, welche nach einem Identifizieren oder Klassifizieren von Seeminen aktiviert werden. Die mit Sprengstoff ausgestatteten Drohnen werden während der Mission des Seeminendetektionssystems mitgeführt und nach Abschluss einer Mission in einem Seegebiet und Verbringung in ein neues Seegebiet an die Spitze einer Reihe mehrerer Fahrzeuggruppen, vorzugsweise gemeinsam mit dem Oberflächenfahrzeug, transportiert.

Weiterhin kann ein Verfahren zum Detektieren von Seeminen bereitgestellt werden, wobei im Unterwasserraum Ortungsdaten erfasst und bewertet werden, wobei nach einer Detektion eines Kontakts (MILEC) ein Klassifizieren des detektierten Kontakts (MILEC) als minenähnlicher Kontakt (MILCO) oder nicht minenähnlicher Kontakte (NONMILCO) erfolgt und nach dem Klassifizieren eines minenähnlichen Kontakts (MILCO) ein Unterwasserfahrzeug den Ort des minenähnlichen Kontakts anfährt und ein Identifizieren als Minenkontakt (MINE) oder als sonstiger Gegenstand (NOMBO) vornimmt, wobei ein autonomes Unterwasserfahrzeug die Ortungsdaten erfasst und ein Detektieren sowie ein anschließendes Klassifizieren der detektierten Kontakte (MILEC) vornimmt.

In einer Ausprägungsform kann dasselbe Unterwasserfahrzeug ein Klassifizieren und ein anschließendes Identifizieren durchführen.

Um Ortungsdaten bereitstellen zu können, werden die Ortungsdaten (12) mittels Sonar erfasst.

In einer weiteren Ausführungsform kommuniziert das autonome Unterwasserfahrzeug mit einer bemannten Trägerplattform.

In einer diesbezüglichen Ausprägungsform wird das autonome Unterwasserfahrzeug von einem unbemannten Oberflächenfahrzeug begleitet, welches über eine Funkverbindung mit der Trägerplattform kommuniziert und einen Informationstransfer zwischen dem autonomen Unterwasserfahrzeug und der Trägerplattform vermittelt.

Weiterhin kann das autonome Unterwasserfahrzeug einem bemannten Seeschiff oder einem Schiffsverband vorausfahren.

In einer weiteren Ausgestaltung des Verfahrens können mehrere autonome Unterwasserfahrzeuge in Fahrzeuggruppen mit jeweils einem Oberflächenfahrzeug gleichzeitig eingesetzt werden, wobei jeder Fahrzeuggruppe ein bestimmtes Seegebiet zugewiesen wird.

Um ein Gebiet möglichst schnell aufzuklären, können die Fahrzeuggruppen in einer Reihe entlang eines Kurses den nachfahrenden Seeschiffs oder Schiffsverbands liegenden Seegebieten eingesetzt werden und nacheinander jeweils in neue Seegebiete an die Spitze der Reihe umgesetzt werden, wobei die Fahrzeuge der jeweiligen Fahrzeuggruppe in das neue Seegebiet überführt werden. Somit ist eine rollierende Aufklärung und Bereinigung möglich.

In einer Ausprägungsform werden die Unterwasserfahrzeuge nach Beendigung ihrer Mission in einem Seegebiet von den jeweiligen Oberflächenfahrzeugen ihrer Fahrzeuggruppe aufgenommen und in das jeweils neue Seegebiet transportiert.

Zudem können die Fahrzeuge einer Fahrzeuggruppe nach Beendigung ihrer Mission in einem bisherigen Seegebiet von einem Transportmittel aufgenommen und in das jeweils neue Seegebiet transportiert werden.

Weitere Merkmale ergeben sich aus den Unteransprüchen sowie den Ausführungsbeispielen, welche nachstehend anhand der Zeichnung näher erläutert sind. Es zeigen:
- Fig. 1: eine schematische Ansicht eines Seeminendetektionssystems mit umfasster Fahrzeuggruppe,
- Fig. 2: ein Ablaufschema eines Verfahrens zum Detektieren von Seeminen mit einem Seeminendetektionssystem gemäß Fig. 1,
- Fig.3: eine schematische Ansicht eines Seeminenerkennungssystems mit mehreren Fahrzeuggruppen mit jeweils einem Oberflächenfahrzeug und mehreren autonomen Unterwasserfahrzeugen.

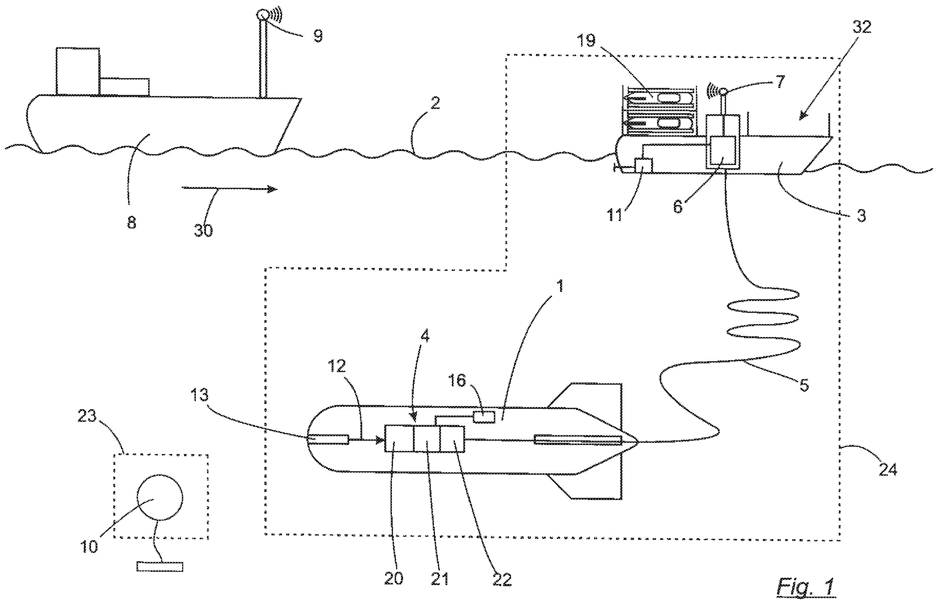

Fig. 1 zeigt ein Seeminendetektionssystem mit einem autonomen Unterwasserfahrzeug (1) und einem unbemannten, an der Wasseroberfläche (2) schwimmenden Oberflächenfahrzeug (3). Das autonome Unterwasserfahrzeug umfasst eine Steuereinheit (4), welche das Unterwasserfahrzeug unter Berücksichtigung eines vorgegebenen Missionsprogramms navigiert. Das autonome Unterwasserfahrzeug (1) ist über ein Lichtwellenleiterkabel (5) mit dem Oberflächenfahrzeug (3), insbesondere einer Steuereinheit (6) des Oberflächenfahrzeugs (3), signalübertragend verbunden.

Das Oberflächenfahrzeug (3) umfasst eine Funkantenne (7), welche eine Funkverbindung mit einer Trägerplattform ermöglicht. Die Trägerplattform ist im gezeigten Ausführungsbeispiel ein Seeschiff (8) oder ein Minenjagdboot, welches eine Funkantenne (9) aufweist und über die Funkantenne (9) mit dem Oberflächenfahrzeug (3) kommuniziert. Das Oberflächenfahrzeug (3) vermittelt eine Informationsübertragung zwischen dem autonomen Unterwasserfahrzeug (1) und dem bemannten Seeschiff (8).

An Bord des Seeschiffs (8) ist ein Leitstand vorgesehen, in welchem eine Bedienperson anhand der vom Oberflächenfahrzeug (3) vermittelten Information die Mission der autonomen Unterwasserfahrzeuge (1) und der Oberflächenfahrzeuge (3) überwacht und gegebenenfalls in die autonome Steuerung eingreift.

Das autonome Unterwasserfahrzeug (1) fährt dem bemannten Seeschiff (8) voraus und führt ein nachstehend noch näher erläutertes Detektieren von Seeminen (10) in einem minengefährdeten Seegebiet durch. Das autonome Unterwasserfahrzeug operiert dabei in Begleitung des Oberflächenfahrzeugs (3), sodass ständig ein Informationsaustausch zwischen dem Unterwasserfahrzeug (1) und dem Seeschiff (8) möglich ist.

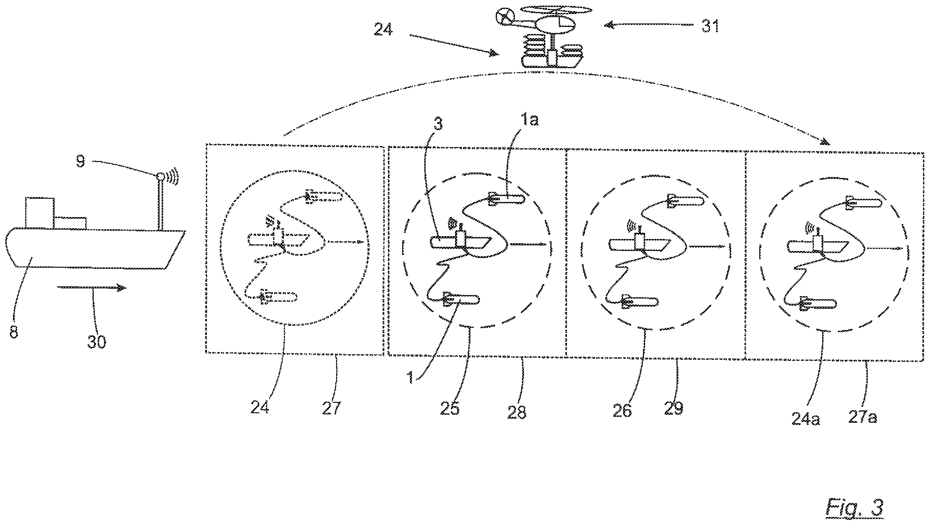

Das autonome Unterwasserfahrzeug (1) und das Oberflächenfahrzeug (3) bilden eine Fahrzeuggruppe (24) (vergl. Fig. 3), welche dem Seeschiff (8) vorausfährt und durch das Detektieren von Seeminen (10) die Leitung des Seeschiffs (8) oder eines Verbands von Seeschiffen (8) durch eine minenfreie Passage ermöglicht. Dabei werden detektierte Seeminen entweder vernichtet oder entschärft oder das Seeschiff (8) und die begleitenden Fahrzeuge unter Umgehung detektierter Seeminen (10) geleitet.

Das Oberflächenfahrzeug (3) weist einen Antrieb (11) auf, welcher von der Steuereinheit (6) des Oberflächenfahrzeugs (3) angesteuert wird. Das Oberflächenfahrzeug (3) wird dabei im Kurs des Seeschiffs (8) durch das zugewiesene Seegebiet geführt, wobei das autonome Unterwasserfahrzeug (1) Ortungsdaten im Unterwasserraum erfasst, um Seeminen (10) zu detektieren. Die Führungen des Oberflächenfahrzeugs (3) und des Unterwasserfahrzeugs (1) sind dabei innerhalb der Fahrzeuggruppe (24) aneinander gekoppelt.

In einem alternativen Ausführungsbeispiel berücksichtigt die Steuereinheit (6) bei der Navigation des Oberflächenfahrzeugs (3) die Navigationsinformation des autonomen Unterwasserfahrzeugs (1), welche über das Lichtwellenleiterkabel (5) zum Oberflächenfahrzeug (3) übertragen wird.

Die Navigationsinformation umfasst dabei beispielsweise Informationen über den Kurs, die Ausrichtung, die Tauchtiefe, die Position (25) oder andere Informationen über die augenblickliche Operationssituation des Unterwasserfahrzeugs (1). Unter Berücksichtigung der Navigationsinformation des autonomen Unterwasserfahrzeugs (1) wird das Oberflächenfahrzeug (3) ggf. dem autonomen Unterwasserfahrzeug (1) nachgeführt, um eine Zugbelastung des Lichtwellenleiterkabels (5) zu vermeiden.

Zum Erkennen von Seeminen (10) erfasst das autonome Unterwasserfahrzeug (1) Ortungsdaten (12), welche zum Detektieren von Seeminen bewertet werden. Das Erfassen der Ortungsdaten (12) erfolgt mittels des Sonars (13), wobei unter einem Sonar entsprechende Sonargeräte und dazugehörige Einrichtungen, insbesondere Sensoren, verstanden werden, mittels denen Gegenstände im Unterwasserraum mit Hilfe von Schallimpulsen geortet werden.

In der Zeichnung ist aus Gründen der Einfachheit ein einzelnes Sonar (13) dargestellt. Das autonome Unterwasserfahrzeug (1) kann jedoch sowohl ein Seitensichtsonar als auch ein Bugsonar oder ein am Boden des autonomen Unterwasserfahrzeugs (1) angeordnetes Bodensonar umfassen oder eine Kombination mehrerer der genannten Sonare. Sind mehrere Sonarsysteme vorgesehen, so werden die Ortungsdaten der Sonare (13) fusioniert und die fusionierten Ortungsdaten (12) bewertet.

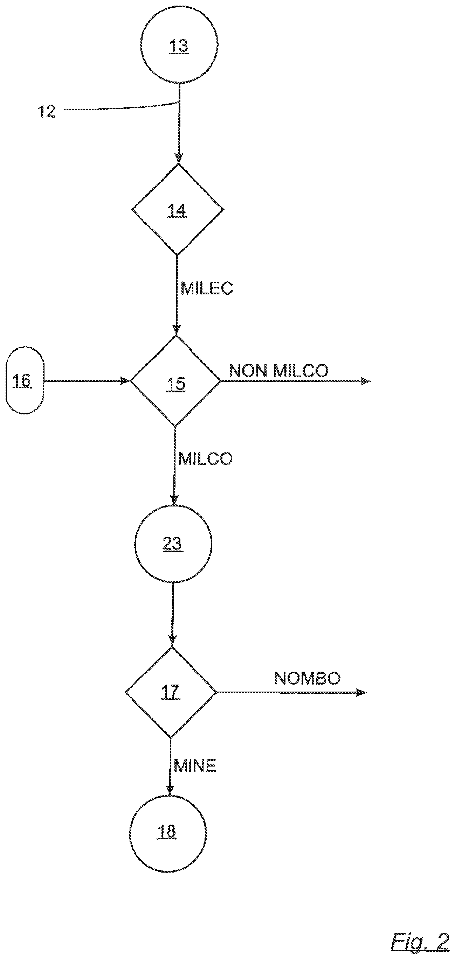

Wie in Fig. 2 dargestellt ist, wird anhand der fortlaufend erfassten Ortungsdaten (12) ein Detektieren (14) von Kontakten durchgeführt. Bei dem Detektieren (14) wird durch Konturerkennung oder Schattenverarbeitung das Vorhandensein eines Gegenstands im überwachten Unterwasserraum erkannt. Nach Entdecken eines Kontakts MILEC (= "mine like echo") erfolgt ein Klassifizieren (15) als minenähnlicher Kontakt MILCO (= "mine like contact") und nicht minenähnlicher Kontakt NONMILCO. Dabei wird anhand von Informationen aus einer Minendatenbank (16) eine Bewertung der Ortungsdaten (12) des detektierten Kontakts MILEC vorgenommen, wobei im Fall einer Übereinstimmung oder Ähnlichkeit mit der entsprechenden Information aus der Minendatenbank (16) ein minenähnlicher Kontakt MILCO angenommen wird.

Ergibt der Vergleich des detektierten Kontakts MILEC mit der Information aus der Minendatenbank (16), dass es sich um einen nicht minenähnlichen Kontakt NONMILCO handelt, also um einen anderen Gegenstand als eine Seemine, so erfolgt keine weitere Aktion.

Sollte sich bei dem Klassifizieren (15) ein minenähnlicher Kontakt MILCO ergeben, so erfolgt in einem weiteren Verfahrensschritt ein Identifizieren (17) des minenähnlichen Kontakts MILCO als Minenkontakt MINE oder sonstiger Gegenstand NOMBO (= "non mine like bottom object"). Im Fall des Identifizierens des Kontakts als anderen Gegenstand als eine Seemine, erfolgt keine weitere Aktion. Ergibt das Identifizieren (17) einen Minenkontakt MINE, also das Vorliegen einer Seemine, so wird anhand des Ergebnisses des Identifizierens (17) eine Beseitigung der identifizierten Seemine in die Wege geleitet. Vorzugsweise wird zur Schaffung einer minenfreien Passage die identifizierte Seemine vernichtet und mit einem entsprechenden Minenjagdauftrag (18) eine mit Sprengstoff ausgestattete Einwegdrohne oder Mehrwegdrohne (19) aktiviert.

Die Fahrzeuggruppe (24) (Fig.1, Fig. 3) ist Teil des Seeminendetektionssystems und führt wenigstens das Detektieren (14) von Kontakten und das Klassifizieren (15) minenähnlicher Kontakte sowie im gezeigten Ausführungsbeispiel auch das Identifizieren (17) von Seeminen durch. Ferner werden mit bestimmten Fahrzeugen des Seeminendetektionssystems auch Drohnen (19) zur Vernichtung von sicher identifizierten Seeminen mitgeführt.

Vorzugsweise werden die Drohnen (19) an Bord des Oberflächenschiffs (3) (Fig. 1) für den bedarfsweisen Einsatz bereitgehalten. Im Ausführungsbeispiel führt jedes Oberflächenschiff (3) während seiner Mission mehrere solcher Drohnen (19) mit sich, wobei sich eine Ausrüstung mit vier Drohnen (19) als besonders vorteilhaft erwiesen hat. Die Drohnen (19) sind insbesondere ferngesteuerte oder autonome unbemannte Unterwasserfahrzeuge, welche mit einer Sprengladung ausgestattet sind. Die Drohne (19) fährt den Ort der identifizierten Seemine (10) an und bringt sie mit Hilfe der Sprenglandung zur Detonation.

Für das Detektieren (14) eines Kontakts MILEC und das anschließende Klassifizieren (15) weist das autonome Unterwasserfahrzeug (1) entsprechende Detektionsmittel (20) und Klassifizierungsmittel (21) auf. Die Detektionsmittel (20) und die Klassifizierungsmittel (21) sind im gezeigten Ausführungsbeispiel Teil der Steuereinheit (4) des autonomen Unterwasserfahrzeugs (1) oder sind in die Steuereinheit (4) implementiert. In einem weiteren Ausführungsbeispiel sind die Detektionsmittel (20) und die Klassifizierungsmittel (21) in eine Auswertungseinheit integriert, welche dem Sonar (13) zugeordnet sein kann.

Die Ergebnisse des Detektierens (14) von Kontakten und des Klassifizierens (15) minenähnlicher Kontakte sowie gegebenenfalls einem Identifizieren (17) von Seeminen werden bei der Navigation des Unterwasserfahrzeugs berücksichtigt. Das autonome Unterwasserfahrzeug (1) kann daher im Rahmen seiner autonomen Mission selbstständig das ihm zugewiesene Seegebiet auf Seeminen (10) prüfen. Dabei erfolgt die Erfassung der Ortungsdaten (12) weit voraus dem bemannten Seeschiff (8), sodass ein Klassifizieren (15) unabhängig von der Position des Seeschiffs (8) erfolgen kann.

Im gezeigten Ausführungsbeispiel umfasst das autonome Unterwasserfahrzeug (1) auch Identifizierungsmittel (22), mit denen nach dem Klassifizieren (15) von Ortungsdaten (12) als minenähnlicher Kontakt MILCO ein Identifizieren (17) als Minenkontakt MINE erfolgen kann. Nach dem Klassifizieren (15) eines minenähnlichen Kontakts MILCO fährt das autonome Unterwasserfahrzeug (1) den Ort (23) des minenähnlichen Kontakts MILCO an und führt das Identifizieren (17) durch.

Das autonome Unterwasserfahrzeug (1) wird demnach sowohl für das Detektieren (14) und das Klassifizieren (15) von Kontakten als auch für das Identifizieren von Minenkontakten MINE verwendet. Die Verwendung desselben Unterwasserfahrzeugs für das Klassifizieren (15) minenähnlicher Kontakte MILCO und das anschließende Identifizieren (17) von Minenkontakten MINE gewährleistet ein rasches und effektives Detektieren von Seeminen, da das autonome Unterwasserfahrzeug (1) zum Ansteuern des Orts (23) des zu identifizierenden Kontakts nur unwesentlich von seinem Missionskurs abweichen muss und den Ort (23) rasch erreichen kann.

Die Information bei der Auswertung der Ortungsdaten (12), also die Ergebnisse des Detektierens (14), des Klassifizierens (15) und des Identifizierens (17), werden über das Lichtwellenleiterkabel (5) und die Funkverbindung des Oberflächenfahrzeugs (3) zum bemannten Seeschiff (8) oder dem dort vorgesehenen Leitstand übertragen.

In einem Ausführungsbeispiel der Erfindung fährt das autonome Unterwasserfahrzeug (1) im Rahmen seines Missionsprogramms selbsttätig den Ort (23), der von ihm als minenähnlicher Kontakt MILCO klassifizierten Ortungsdaten (12), an und nimmt anschließend das Identifizieren (17) vor.

In einem weiteren Ausführungsbeispiel meldet das autonome Unterwasserfahrzeug (1) das Vorliegen eines im Rahmen des Klassifizierens (15) festgestellten minenähnlichen Kontakts MILCO dem bemannten Leitstand an Bord des Seeschiffs (8), ohne zunächst von seinem Kurs abzuweichen. Für ein anschließendes Identifizieren (17) wird dem autonomen Unterwasserfahrzeug (1) von der Bedienperson des Seeminenerkennungssystems an Bord des Seeschiffs (8) ein entsprechender Auftrag zum Ansteuern (5) des Orts (23) und des Identifizierens (17) erteilt.

Anhand der vom autonomen Unterwasserfahrzeug (1) übertragenen Information erteilt eine Bedienperson an Bord des Seeschiffs einen Minenjagdauftrag (18) an das Oberflächenfahrzeug (3), sodass das Oberflächenfahrzeug (3) eine Drohne (19) zum Vernichten einer Seemine (10) aktiviert. In einer weiteren vorteilhaften Ausführungsform entscheidet die Fahrzeuggruppe autonom über die weitere Vorgehensweise nach dem Identifizieren (17) einer Seemine und aktiviert mit einem Minenjagdauftrag (18) eine Drohne (19).

Fig. 3 zeigt ein Ausführungsbeispiel eines Seeminendetektionssystems mit mehreren Fahrzeuggruppen (24, 25, 26) mit jeweils Oberflächenfahrzeugen (3), autonomen Unterwasserfahrzeugen (1, 1a). Die Oberflächenfahrzeuge (3) sind dabei wie zu Fig. 1 beschrieben mit den ihnen zugeordneten Unterwasserfahrzeugen (1, 1a) signalübertragend verbunden und operieren gemeinsam in dem Seeminendetektionssystem. Jeder Fahrzeuggruppe (24, 25, 26) ist dabei ein bestimmtes Seegebiet (27, 28, 29) zum Durchführen des jeweiligen Missionsprogramms vorgegeben. Die Seegebiete (27, 28, 29) liegen dabei in einer Reihe entlang des Kurses (30) des nachfahrenden Seeschiffs (8) oder des Schiffsverbands. Die Fahrzeuggruppen (24, 25, 26) folgen dabei im Wesentlichen dem gleichen Kurs wie das Seeschiff (8) und patrouillieren das ihnen jeweils zugeordnete Seegebiet (27, 28, 29). Dabei durchquert das Oberflächenfahrzeug (3) das Seegebiet (27, 28, 29) möglichst geradlinig entlang des Kurses (30).

Im gezeigten Ausführungsbeispiel umfasst jede Fahrzeuggruppe (24, 25, 26) ein Oberflächenfahrzeug (3) und zwei autonome Unterwasserfahrzeuge (1, 1a), das heißt, dass jedem Oberflächenfahrzeug des Seeminendetektionssystems zwei autonome Unterwasserfahrzeuge (1, 1a) zugeordnet sind.

Die Zuordnung zweier autonomer Unterwasserfahrzeuge (1, 1a) pro Fahrzeuggruppe (24, 25, 26) ermöglicht eine schnellere Aufklärung einer breiten Passage durch ein vermintes Seegebiet, wobei die beiden autonomen Unterwasserfahrzeuge (1, 1a) beiderseits des Oberflächenfahrzeugs (3) operieren. Das Paar der Unterwasserfahrzeuge (1, 1a) wird dabei bezüglich der jeweiligen Navigation des Unterwasserfahrzeugs (1, 1a) aufeinander abgestimmt. Hierzu kann die Steuereinheit (6) des Oberflächenschiffs (3) jedem der angeschlossenen Unterwasserfahrzeuge gegebenenfalls eine entsprechende Steuerinformation über das Lichtwellenleiterkabel (5) vermitteln.

Um die Aufklärungsgeschwindigkeit des Seeminendetektionssystems und/oder die Breite einer aufzuklärenden Schiffspassage durch ein vermintes Seegebiet zu erhöhen, können in jeder Fahrzeuggruppe (24, 25, 26) des Seeminendetektionssystems auch mehr als zwei autonome Unterwasserfahrzeuge (1, 1a) vorgesehen sein und an das jeweilige Oberflächenfahrzeug (3) angeschlossen werden.

Sobald die Unterwasserfahrzeuge (1, 1a) ihre Mission in dem zugewiesenen Seegebiet (27, 28, 29) beendet haben, wird die jeweilige Fahrzeuggruppe (24, 25, 26) an die Spitze der Reihe der Fahrzeuggruppen (24, 25, 26) umgesetzt. Dabei werden die Fahrzeuge der jeweiligen Fahrzeuggruppe (24, 25, 26) in dieses neue Seegebiet (27, 28, 29) überführt, um dort die vorgesehene Mission zum Detektieren von Seeminen aufzunehmen oder fortzusetzen.

Um eine fortlaufende Aufklärung der vorgesehenen Schiffspassage für das nachfolgende Seeschiff oder den Schiffsverband zu gewährleisten, wird die dem Seeschiff (8) am nächsten liegende Fahrzeuggruppe (24), welche in der Zeichnung gestrichelt dargestellt ist, an die Spitze der Reihe umgesetzt, um dort als weitere Fahrzeuggruppe (24a) in der wiederkehrenden Reihe von Fahrzeuggruppen das Detektieren von Seeminen wieder aufzunehmen.

Zum Umsetzen einer Fahrzeuggruppe (24, 25, 26) werden die Fahrzeuge der jeweiligen Fahrzeuggruppe (24a) nach Beendigung ihrer Mission im bisherigen Seegebiet (27) von einem schnellen Transportmittel aufgenommen und in das jeweils neue Seegebiet (27a) an die Spitze der Reihe transportiert. Im gezeigten Ausführungsbeispiel ist das Transportmittel für die Fahrzeuggruppen ein Helikopter (31).

Der Helikopter (31) nimmt dabei das Oberflächenfahrzeug (3) mit seiner Fracht von Drohnen (19) sowie den beiden autonomen Unterwasserfahrzeugen (1, 1a) auf. Vorteilhaft werden die Unterwasserfahrzeuge (1, 1a) vor der Aufnahme durch den Helikopter (31) an dem jeweiligen Oberflächenfahrzeug (3) angedockt, um einen zügigen und sicheren Transport zu gewährleisten. Hierzu ist an dem Oberflächenfahrzeug (3) eine entsprechende Aufnahmeeinrichtung (32) angeordnet.

Alternativ zu einem zusätzlichen Transportmittel, beispielsweise dem Helikopter (31), können die Fahrzeuggruppen (24, 25, 26) mittels der angetriebenen Oberflächenfahrzeuge (3) in die jeweils neuen Seegebiete überführt werden. Die Oberflächenfahrzeuge (3) weisen dafür einen leistungsfähigen Antrieb (11) auf, welche für die Überführung eine entsprechend höhere Geschwindigkeit ermöglichen als die Begleitgeschwindigkeit, mit der die Oberflächenfahrzeuge (3) die aktiven Unterwasserfahrzeuge (1, 1a) während der Mission begleiten.

Die Anzahl der eingesetzten Fahrzeuggruppen (24, 25, 26) wird so gewählt, dass sich über das Produkt der Anzahl der Fahrzeuggruppen und der Begleitgeschwindigkeit die gewünschte Geschwindigkeit des Seeschiffs (8) oder des Schiffsverbands ergibt. Anders ausgedrückt kann proportional mit der Anzahl der eingesetzten Fahrzeuggruppen die Aufklärungsgeschwindigkeit erhöht werden, mit der eine Seeminendetektion in einer Schiffspassage durchgeführt werden kann, sodass die Seeschiffe (8) schnell durch das minengefährdete Seegebiet fahren können.

## Patentansprüche

1. Fahrzeuggruppe (24), welche ein unbemanntes Oberflächenfahrzeug (3) und ein unbemanntes autonomes Unterwasserfahrzeug (1, 1a) aufweist, wobei das autonome Unterwasserfahrzeug Ortungsmittel, insbesondere ein Sonar, zum Erfassen von Ortungsdaten (12) im Unterwasserraum aufweist, wobei das autonome Unterwasserfahrzeug eine Auswerteeinheit oder mehrere Auswerteeinheiten aufweist und die Auswerteeinheit oder die Auswerteeinheiten derart eingerichtet ist oder sind, dass diese Detektionsmittel (20) zum Detektieren (14) eines Kontakts (MILEC) anhand der erfassten Ortungsdaten (12) sowie mit Klassifizierungsmitteln (21) zum Klassifizieren (15) des detektierten Kontakts (MILEC) als minenähnlicher Kontakt (MILCO) oder nicht minenähnlicher Kontakt (NONMILCO) umfassen, wobei das Klassifizieren mittels eines Vergleichens des Kontakts (MILEC) mit bekannten Mineninformationen erfolgt, sodass ein minenähnlicher Kontakt (MILCO) als ein Minenkontakt (MINE) oder als sonstiger Gegenstand (NOMBO) identifizierbar ist und ein Seegebiet, insbesondere im Unterwasserraum, autonom durch die Fahrzeuggruppe aufklärbar ist.

2. Fahrzeuggruppe nach Anspruch 1, **dadurch gekennzeichnet, dass** das autonome Unterwasserfahrzeug (1, 1a) mit dem unbemannten Oberflächenfahrzeug signalübertragend verbunden ist, wobei die Verbindung mittels eines Lichtwellenleiterkabels realisiert ist.

3. Fahrzeuggruppe nach einem der vorherigen Ansprüche, **dadurch gekennzeichnet, dass** die Ortungsmittel mehrere Sonare oder Sonarsysteme umfassen.

4. Fahrzeuggruppe nach einem der vorherigen Ansprüche, **dadurch gekennzeichnet, dass** das Oberflächenfahrzeug einen Antrieb und eine Steuereinrichtung aufweist, welche derart eingerichtet ist, dass das Oberflächenfahrzeug unter Berücksichtigung des autonomen Unterwasserfahrzeugs geführt wird.

5. Fahrzeuggruppe nach einem der vorherigen Ansprüche, **dadurch gekennzeichnet, dass** das Oberflächenfahrzeug (3) mit Sprengstoff ausgestattete Drohnen zur bedarfsweisen Vernichtung von Seeminen (10) trägt.

6. Fahrzeuggruppe nach einem der vorherigen Ansprüche, **gekennzeichnet durch** weitere Unterwasserfahrzeuge.

7. Seeminendetektionssystem, welches eine Fahrzeuggruppe nach einem der vorherigen Ansprüche und eine Trägerplattform aufweist, wobei die Trägerplattform und das Oberflächenfahrzeug datenaustauschend verbunden sind.

8. Seeminendetektionssystem nach Anspruch 7, **gekennzeichnet durch** mehrere Fahrzeuggruppen (24, 24a, 25, 26) mit jeweils einem Oberflächenfahrzeug (3) und mindestens einem autonomen Unterwasserfahrzeug (1, 1a).

9. Fluggerät, insbesondere Hubschrauber, welches eine Fahrzeuggruppe nach einem der Ansprüche 1 bis 6 aufweist.

## Claims

1. Vehicle group (24), which has an unmanned surface vehicle (3) and an unmanned autonomous underwater vehicle (1, 1a), wherein the autonomous underwater vehicle has locating means, in particular a sonar, for acquiring location data (12) in the underwater space, wherein the autonomous underwater vehicle has an evaluation unit or several evaluation units and the evaluation unit or the evaluation units is or are configured in such a way that these comprise detection means (20) for detecting (14) a contact (MILEC) with reference to the acquired location data (12) as well as with classification means (21) for classifying (15) the detected contact (MILEC) as a mine-like contact (MILCO) or non-mine-like contact (NONMILCO), wherein the classification takes place by means of a comparing of the contact (MILEC) with known mine information, so that a mine-like contact (MILCO) is identifiable as a mine contact (MINE) or as another object (NOMBO) and a sea area, in particular in the underwater space, can be cleared up autonomously by the vehicle group.

2. Vehicle group according to claim 1, **characterised by** that the autonomous underwater vehicle (1, 1a) is connected in a signal-transmitting manner to the unmanned surface vehicle, wherein the connection is realised by an optical fibre cable.

3. Vehicle group according to any one of the preceding claims, **characterised by** that the location means comprise several sonars or sonar systems.

4. Vehicle group according to any one of the preceding claims, **characterised by** that the surface vehicle has a drive and a control device, which is configured in such a way that the surface vehicle is guided taking the autonomous underwater vehicle into account.

5. Vehicle group according to any one of the preceding claims, **characterised by** that the surface vehicle (3) carries drones equipped with explosive to destroy sea mines (10) as required.

6. Vehicle group according to any one of the preceding claims, **characterised by** further underwater vehicles.

7. Sea mine detection system, which has a vehicle group according to any one of the preceding claims and a carrier platform, wherein the carrier platform and the surface vehicle are connected for exchanging data.

8. Sea mine detection system according to claim 7,
**characterised by** several vehicle groups (24, 24a, 25, 26) each with a surface vehicle (3) and at least one autonomous underwater vehicle (1, 1a).

9. Aircraft, in particular a helicopter, which has a vehicle group according to any one of claims 1 to 6.

## Revendications

1. Groupe de véhicules (24), qui comporte un véhicule de surface (3) non habité et un véhicule sous-marin autonome (1, 1a) non habité, le véhicule sous-marin autonome comportant des moyens de repérage, en particulier un sonar, destinés à acquérir des données de repérage (12) dans l'espace sous-marin, le véhicule sous-marin autonome comportant une unité d'évaluation ou plusieurs unités d'évaluation et l'unité d'évaluation ou les unités d'évaluation étant configurée ou configurées de telle manière que celle(s)-ci comprend/comprennent des moyens de détection (20) pour détecter (14) un contact (MILEC) à l'aide des données de repérage (12) acquises ainsi que des moyens de classification (21) pour classifier (15) le contact (MILEC) détecté comme contact de type mine (MILCO) ou contact n'étant pas de type mine (NONMILCO), la classification étant effectuée au moyen d'une comparaison du contact (MILEC) avec des informations de mine connues, de sorte qu'un contact de type mine (MILCO) peut être identifié comme contact de mine (MINE) ou comme un autre objet (NOMBO) et qu'une région maritime, en particulier dans l'espace sous-marin, peut être explorée de manière autonome par le groupe de véhicules.

2. Groupe de véhicules selon la revendication 1, **caractérisé en ce que** le véhicule sous-marin autonome (1, 1a) est relié au véhicule de surface non habité de manière permettant la transmission de signaux, la liaison étant réalisée au moyen d'un câble à fibres optiques.

3. Groupe de véhicules selon l'une des revendications précédentes, **caractérisé en ce que** les moyens de repérage comprennent plusieurs sonars ou systèmes de sonar.

4. Groupe de véhicules selon l'une des revendications précédentes, **caractérisé en ce que** le véhicule de surface comporte un entraînement et un dispositif de commande, qui est configuré de telle manière que le véhicule de surface est guidé compte tenu du véhicule sous-marin autonome.

5. Groupe de véhicules selon l'une des revendications précédentes, **caractérisé en ce que** le véhicule de surface (3) porte des drones équipés de matière explosive pour la destruction de mines marines (10) si nécessaire.

6. Groupe de véhicules selon l'une des revendications précédentes, **caractérisé par** d'autres véhicules sous-marins.

7. Système de détection de mines marines, qui comporte un groupe de véhicules selon l'une des revendications précédentes et une plate-forme de support, la plate-forme de support et le véhicule de surface étant reliés de manière permettant l'échange de données.

8. Système de détection de mines marines selon la revendication 7, **caractérisé par** plusieurs groupes de véhicules (24, 24a, 25, 26) comprenant respectivement un véhicule de surface (3) et au moins un véhicule sous-marin autonome (1, 1a).

9. Appareil volant, en particulier hélicoptère, qui comporte un groupe de véhicules selon l'une des revendications 1 à 6.
